# EUROPÄISCHE PATENTSCHRIFT

(11) **EP 1 090 733 B1**
(45) Veröffentlichungstag und Bekanntmachung des Hinweises auf die Patenterteilung: **30.07.2003**
(21) Anmeldenummer: 00120349.6
(22) Anmeldetag: 16.09.2000
(51) Int. Cl.: B29C 45/16, B29C 45/02

(54) **Verfahren und Vorrichtung zum Mehrkomponentenspritzgiessen von Kunststoff-Formteilen**
Method and apparatus for multicomponent injection moulding of plastic parts
Procédé et dispositif pour mouler par injection à multi-composants des pièces en matière plastique

(30) Priorität: 06.10.1999 DE 19948278
(43) Veröffentlichungstag der Anmeldung: 11.04.2001
(73) Patentinhaber: Battenfeld GmbH, D-58540 Meinerzhagen (DE)
(72) Erfinder: Eckardt, Helmut, Dipl.-Ing., 58540 Meinerzhagen (DE); Bielich, Norbert, Dipl.-Ing., 57223 Kreuztal (DE)

(56) Entgegenhaltungen:
- DE-A- 2 128 373
- FR-A- 1 262 619
- FR-A- 2 204 499
- US-A- 3 969 461
- US-A- 4 029 841
- PATENT ABSTRACTS OF JAPAN vol. 17, no. 159 (M-1389), 29. März 1993 (1993-03-29) -& JP 04 325216 A (TOYODA GOSEI CO LTD), 13. November 1992 (1992-11-13)

## Beschreibung

Die Erfindung betrifft ein Verfahren zum Mehrkomponenten-Spritzgießen von Kunststoff-Formteilen, bei dem mindestens zwei unterschiedliche Kunststoff-Komponenten zur Ausbildung eines Kunststoff-Formteils in ein Spritzgießwerkzeug eingespritzt werden, wobei das Verfahren die Schritte aufweist:
a) Einbringen einer ersten Kunststoffkomponente in einen Schmelzesammelraum, der von einem kolbenartigen Abschlußbereich begrenzt wird;
b) anschließendes Einbringen einer zweiten Kunststoffkomponente in den Schmelzesammelraum;
c) Austreiben der im Schmelzesammelraum kumulierten Kunststoffschmelze in das Spritzgießwerkzeug.

Des weiteren betrifft die Erfindung eine Vorrichtung zum Mehrkomponenten-Spritzgießen von Kunststoff-Formteilen.

Ein Verfahren und eine Vorrichtung der gattungsgemäßen Art sind aus der **DE-OS 22 59 818** bekannt. Dort wird in zwei oder mehreren Plastifiziereinheiten unterschiedliches Kunststoffmaterial aufgeschmolzen und über eine speziell steuerbare Mehrkomponenten-Spritzdüse in ein Spritzgießwerkzeug eingespritzt. Die Düse weist dabei einen recht komplizierten Aufbau auf, um eine genaue Steuerung der einzelnen Schmelzeflüsse der jeweiligen Kunststoff-Komponenten zu bewerkstelligen.

Andere Schmelzeeinspritzvorrichtungen zum Spritzgießen von Kunststoff sind ansonsten im Stand der Technik hinlänglich bekannt. Beispielsweise ist in der **WO 98/09768** eine Spritzgießvorrichtung offenbart, bei der - anstatt des sonst üblichen direkten Einspritzens von Kunststoffschmelze aus der Plastifizier- und Einspritzeinheit - Schmelze in einen Aufnahmeraum eingebracht wird und anschließend diese mittels eines Stempels in die Werkzeugkavität gedrückt wird. Damit wird eine Reduzierung des Betriebsdrucks in der Schmelze erreicht. Die dort beschriebene Lösung weist einen Aufnahmeraum zur Aufnahme der für einen Schuß benötigen Kunststoffschmelze auf, wobei der Kunststoff durch einen beheizten Durchgang mittels einer Zuführspindel in eine Röhre und dann mit einem Stempel in den Aufnahmeraum verschoben wird. Anschließend wird die Aufnahmeeinheit in eine zweite Stellung verschoben, in der der Aufnahmeraum mit einer Öffnung des Werkzeugs fluchtet. In dieser Position drückt dann ein zweiter Stempel die Kunststoffschmelze in die Formkavität.

Wie auch bei dieser speziellen vorbekannten Lösung gilt generell, daß beim Spritzgießen stets über eine gewisse Fließweglänge das Kunststoffmaterial in das Werkzeug eingebracht werden muß. Aufgrund der Rheologie und der jeweiligen Fülltechnik ergibt es sich, daß am Anspritzpunkt ein hoher Druck zum Einspritzen der Schmelze aufgebracht werden muß, der dann entlang des Fließweges deutlich abnimmt. Am Fließwegende tritt infolge des Druckverlustes nur noch ein deutlich geringerer Druck als am Einspritzpunkt auf. Dieser Druckverlust über den Fließweg führt dazu, daß im Einspritzpunkt sehr hohe Drücke erforderlich sind, um sicherzustellen, daß auch am Fließwegende das notwendige Druckniveau vorliegt, das für ein vollständiges Füllen der Werkzeugkavität benötigt wird.

Um bei langen Fließwegen die sich ergebenden hohen Druckverluste zu minimieren, ist es üblich, Formteile auch mehrfach anzuspritzen. D. h. die Formkavität wird mit mehreren Anspritzpunkten versehen. Nachteilig hierbei ist es jedoch, daß sich an den Stellen, an denen die unterschiedlichen Fließfronten aufeinandertreffen, Bindenähte bilden, die eine mechanische Schwächung des Formteils bedingen. Weiterhin ist es nachteilhaft, daß durch mehrere Einspritzpunkte sehr stark unterschiedliche Druckverhältnisse an verschiedenen Positionen der Formkavität vorliegen.

Zur Abhilfe sind hierzu Verfahren bekannt, die zum Ziel haben, die Innendrücke im Werkzeug zu reduzieren. Ein derartiges Verfahren ist die Spritzprägetechnik, bei der mit Tauchkanten-Werkzeugen gearbeitet wird. So wird beispielsweise mit vergrößerter Wanddicke die gewünschte Kunststoffmasse eingespritzt und dann über den Schließmechanismus der Spritzgießmaschine das Werkzeug zusammengefahren. Die Wanddicke wird dadurch reduziert, daß ein Prägevorgang ausgeführt wird. Dadurch ist es möglich, einen gleichmäßigen Prägedruck, auch zum Fließwegende hin, sicherzustellen. Bei anderen Verfahren wird der Einspritzvorgang zunächst mit einer geringen Wanddicke begonnen; beim Einspritzen des Kunststoffmaterials in die Werkzeugkavität wird dann die Wanddicke des Formteils vergrößert, bis die gewünschte Formmasse gänzlich eingespritzt ist. Anschließend wird die Schließkraft auf das Werkzeug aufgebracht und die Wanddicke auf das gewünschte Maß reduziert.

Nachteilig ist bei all den vorbekannten Verfahren - sowohl hinsichtlich der Verarbeitung von einer als auch hinsichtlich der Verarbeitung von mehreren Kunststoff-Komponenten -, daß besondere Werkzeugtechniken und/oder Verfahrensabläufe benötigt werden, um möglichst geringe und gleichbleibende Drücke in der Werkzeugkavität sicherzustellen. Das bedingt einen recht großen apparativen und verfahrenstechnischen Aufwand. Weiterhin sind gegebenenfalls Einschränkungen hinsichtlich der Formteilgeometrie in Kauf zu nehmen.

Der vorliegenden Erfindung liegt daher die **Aufgabe** zugrunde, ein Verfahren und eine zugehörige Vorrichtung zum Spritzgießen von Kunststoff-Formteilen, bestehend aus mehreren Kunststoff-Komponenten zu schaffen, die die vorbekannten Nachteile vermeiden oder zumindest reduzieren. Es sollen also die Vorteile der bekannten Spritzprägetechnik ausgenutzt werden, ohne deren Nachteile in Kauf nehmen zu müssen. Des weiteren soll ein Augenmerk darauf gerichtet sein, daß bestehende Spritzgießmaschinen ohne großen Aufwand entsprechend umgerüstet werden können.

Die **Lösung** dieser Aufgabe durch die Erfindung ist verfahrensgemäß dadurch gekennzeichnet, daß der kolbenartige Abschlußbereich (3) des Schmelzesammelraums (2) beim Austreiben der Kunststoffschmelze gemäß dem oben genannten Schritt c) derart verschoben wird, daß er einen Teil der Kavitätswand (4) des Spritzgießwerkzeugs (1) bildet.

Der Grundgedanke der Erfindung stellt also darauf ab, daß die einzelnen einzuspritzenden Schmelze-Komponenten zunächst in einem Sammelraum kumuliert werden, der durch eine Kolbenfläche begrenzt wird. Beim anschließenden Einspritzen der Schmelzen in die Werkzeugkavität wird der Kolben derart verschoben, daß er schließlich einen Bereich der eigentlichen Werkzeugkavität bildet. Dabei bildet die Kolbenfläche einen gewissen Anteil der (in Kolbenverschieberichtung betrachteten projizierten) Fläche, über die sich der Einspritzdruck gleichmäßig verteilen kann. Es kommt dadurch zu einer Vergleichmäßigung der Druckverteilung in der Werkzeugkavität. Die benötigten Einspritzdrücke können reduziert werden, was die eingangs beschriebenen Nachteile vermeidet oder zumindest reduziert.

Es kann auch vorgesehen werden, daß nach obigem Schritt b) und vor dem genannten Schritt c) weitere erste Kunststoffkomponente (K₁) in den Schmelzesammelraum (2) eingespritzt wird. Dann befindet sich dort also eine Schichtung der Kunststoffmaterialien 1 - 2 - 1.

Gemäß einer Fortbildung ist vorgesehen, daß sich der kolbenartige Abschlußbereich (3) des Schmelzesammelraums (2) vor Beginn des Austreibens der Kunststoffschmelze in das Spritzgießwerkzeug (1) in einer Endlage (9) befindet.

Der genauen Steuerung und Regelung kommt beim erfindungsgemäßen Verfahren eine gewisse Bedeutung zu; diese können jedoch mit üblichen Spritzgießvorrichtungen des Standes der Technik in einfacher Weise durchgeführt werden. Dabei ist bevorzugt vorgesehen, daß das Austreiben der im Schmelzesammelraum (2) kumulierten Kunststoffschmelze in das Spritzgießwerkzeug (1) zumindest zeitweise gesteuert oder geregelt erfolgt. Bevorzugt erfolgt die Regelung bzw. Steuerung in Abhängigkeit des Schmelzedrucks im Schmelzesammelraum (2). Die Regelung bzw. Steuerung kann des weiteren zeit-, weg- oder druckabhängig erfolgen.

Vorteilhafterweise wird der Nachdruck auf die Schmelze nach dem Austreiben der im Schmelzesammelraum (2) kumulierten Kunststoffschmelze in das Spritzgießwerkzeug (1) über den kolbenartigen Abschlußbereich (3) des Schmelzesammelraums (2) aufgebracht.

Eine Verfahrensverbesserung ergibt sich, wenn der kolbenartige Abschlußbereich (3) des Schmelzesammelraums (2) temperiert wird. Dabei kommt sowohl eine gezielte Beheizung als auch eine Kühlung in Frage.

Das Verfahren kann auch mit speziellen Fertigungsverfahren kombiniert werden. Dann ist namentlich vorgesehen, daß beim Austreiben der im Schmelzesammelraum (2) kumulierten Kunststoffschmelze in das Spritzgießwerkzeug (1) eine dort positionierte Folie hinterspritzt wird. Alternativ ist es möglich, daß beim Austreiben der im Schmelzesammelraum (2) kumulierten Kunststoffschmelze in das Spritzgießwerkzeug (1) ein dort positioniertes Textilmaterial hinterspritzt wird.

Schließlich ist es möglich, auch die Prägetechnik einzusetzen; dann wird nach dem Austreiben der im Schmelzesammelraum (2) kumulierten Kunststoffschmelze in das Spritzgießwerkzeug (1) durch den kolbenartigen Abschlußbereich (3) ein Prägevorgang ausgeführt.

Die erfindungsgemäße Vorrichtung zum Mehrkomponenten-Spritzgießen von Kunststoff-Formteilen weist folgende Elemente auf:
- mindestens zwei Plastifiziereinheiten (5, 15) zum Plastifizieren von zwei Kunststoffmaterialien (K₁ ,K₂),
- einen Schmelzesammelraum (2), in den die von den Plastifiziereinheiten (5, 15) hergestellten Kunststoffschmelzen (K₁ ,K₂) gesammelt werden, und
- ein Spritzgießwerkzeug (1) mit einer Werkzeugkavität (10).

Erfindungsgemäß ist vorgesehen, daß der Schmelzesammelraum (2) von einem kolbenartigen Abschlußbereich (3) begrenzt wird, der so geformt ist, daß er zumindest einen Teil der Kavitätswand (4) des Spritzgießwerkzeugs (1) bildet.

Bevorzugt ist vorgesehen, daß im Bereich des kolbenartigen Abschlußbereichs (3) des Schmelzesammelraums (2) Mittel zum Temperieren (11) angeordnet sind.

Weiterhin ist für eine genaue Steuerung bzw. Regelung vorgesehen, daß in den Schmelzefließwegen (6, 7) Ventilmittel (12) angeordnet sind, mit denen der Durchfluß von Kunststoffschmelze unterbrochen und freigegeben werden kann.

Bevorzugt ist an eine konstruktive Ausgestaltung gedacht, bei der der kolbenartige Abschlußbereich (3) des Schmelzesammelraums (2) als Endstück eines Schneckenzylinders (13) ausgebildet ist, in dem eine axialverschieblich in diesem angeordnete Plastifizier- und Schubschnekke (8) angeordnet ist. Des weiteren ist es vorteilhaft, wenn dann der Schneckenzylinder (13) mit Bewegungsmitteln (14) in Verbindung steht, mit denen der Schneckenzylinder (13) relativ zum Spritzgießwerkzeug (1) bewegt werden kann.

Die Reduzierung des Drucks in der Kavität wird besonders vorteilhaft bewerkstelligt, wenn die projizierte Fläche (A_{K}) des kolbenartigen Abschlußbereichs (3) in seiner Verschieberichtung (R) einen Anteil von mindestens 0,5 %, vorzugsweise mindestens 5 %, der projizierten Fläche (A_{G}) der gesamten Kavitätswand (4) in der Verschieberichtung (R) beträgt.

In der Zeichnung sind Ausführungsbeispiele der erfindungsgemäßen Lösung dargestellt.
- Fig. 1: zeigt schematisch eine Spritzgießvorrichtung während eines ersten Verfahrensschrittes, in
- Fig. 2: ist die Spritzgießvorrichtung während eines späteren Verfahrensschrittes dargestellt,
- Fig.3: zeigt die Spritzgießvorrichtung während eines noch späteren Verfahrensschrittes, die
- Fig. 4: stellt einen Zustand der Spritzgießvorrichtung bei einem modifizierten Verfahren vor dem Einspritzen dar,
- Fig. 5a und Fig. 5b: zeigt das modifizierte Verfahren gemäß Fig. 4 zu einem späteren Verfahrenszeitpunkt.
- Fig. 6: läßt den Einspritzkolben beim Einsatz von drei unterschiedlichen Kunststoffkomponenten erkennen, in
- Fig. 7a und Fig. 7b: ist das Ende des Einspritzkolbens mit einem vorteilhaften Ventilelement dargestellt.
- Fig. 8: zeigt das erfindungsgemäße Konzept, angewendet auf zwei Spritzgießwerkzeuge.

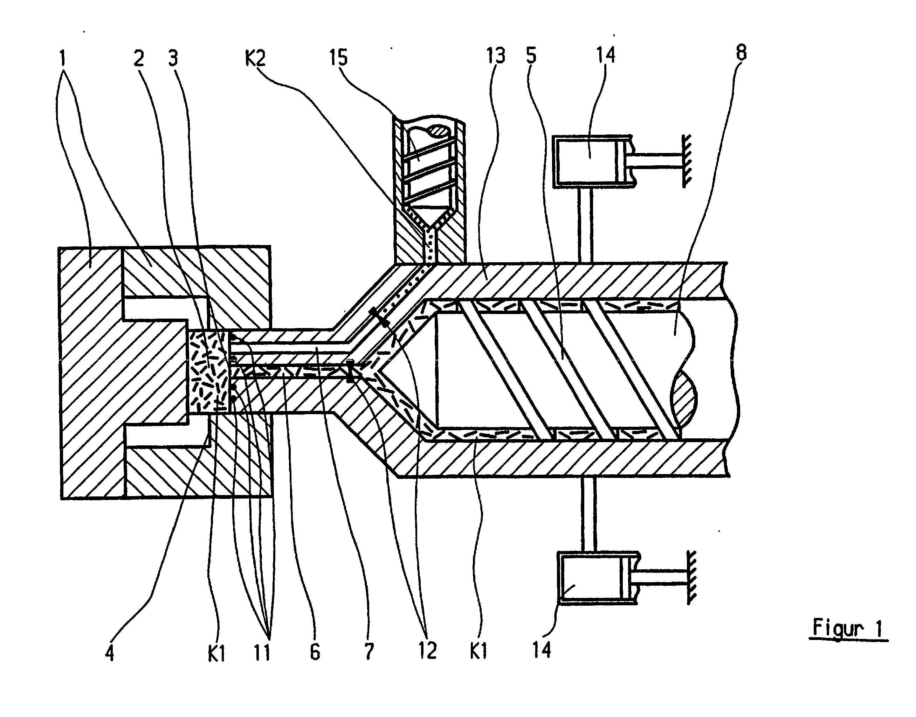

Die Spritzgießvorrichtung, die in Fig. 1 dargestellt ist, ermöglicht die Durchführung des erfindungsgemäßen Verfahrens. Das Spritzgieß-. werkzeug 1 schließt in bekannter Weise eine Kavität 10 ein, in die Kunststoffmaterial eingespritzt wird. Eine erste Kunststoffkomponente K₁ wird von einer ersten Plastifiziereinheit 5 aufgeschmolzen, wobei in bekannter Weise eine Schnecke 8 als Schubschnecke in einem Schnekkenzylinder 13 angeordnet ist.

Der Schneckenvorraum "vor" der Schnecke 8 bildet einen Schmelzesammelraum, von dem aus die Schmelze K₁ über einen Schmelzefließweg 6 in den eigentlichen Schmelzesammelraum 2 überfließen kann. Dies kann in gesteuerter bzw. geregelter Weise durch das Ventilmittel 12 erfolgen, wobei dieses Mittel jedoch nicht notwendigerweise erforderlich ist.

In ähnlicher Weise wird über einen weiteren Schmelzefließweg 7 ein zweites plastifiziertes Kunststoffmaterial K₂ vor den kolbenartigen Abschlußbereich 3 gefördert, gleichfalls in gesteuerter bzw. geregelter Weise durch das weitere Ventil 12. Das Material selber wird in einer zweiten Plastifiziereinheit 15 aufbereitet.

Das Ende des Schneckenzylinders 13 ist als kolbenartiger Abschlußbereich 3 ausgebildet. D. h. beim Verschieben des Schneckenzylinders 13 - namentlich durch die Bewegungsmittel 14 - wirkt das Ende des Schnekkenzylinders 13 als Kolben in einer nicht näher bezeichneten zylindrischen Buchse, die in das Spritzgießwerkzeug 1 integriert ist. Die Schmelze wird somit aus dem Schmezesammelraum 2 in die Kavität 10 gefördert.

Für eine mindestens zeitweise Temperierung des kolbenartigen Abschlußbereichs 3 sorgen die Mittel 11. Diese können sowohl eine gezielte Beheizung als auch ein Kühlung bewerkstelligen, was im konkreten Einzelfall von der Rheologie und vom zu verarbeitenden Kunststoff abhängt.

Fig. 1 stellt einen frühen Verfahrenszustand dar: Es wurde bereits Schmelze der ersten Art (K₁) durch die Schnecke 8 plastifiziert und im Schneckenvorraum kumuliert. Bevorzugt befindet sich - was nicht dargestellt ist - der kolbenartige Abschlußbereich 3 zunächst in einer solchen Position, daß der Bereich 3 bündig mit der Kavitätswand 4 abschließt (also ganz "links"). In dem Maße, wie Schmelze über den Fließweg 6 vom Schneckenvorraum in den Sammelraum 2 überströmt, wird der kolbenartige Abschlußbereich 3 "nach rechts" bewegt, so daß das für die Schmelze benötigte Volumen vor dem Abschlußbereich 3 gebildet wird. Dies erfolgt so lange, bis sich der Abschlußbereich 3 in einer ersten Zwischenposition befindet. Dieser Zustand ist in Fig. 1 dargestellt; es ist nunmehr das vorgesehene Quantum an erster Kunststoffschmelze im Schmelzesammelraum 2 vorhanden.

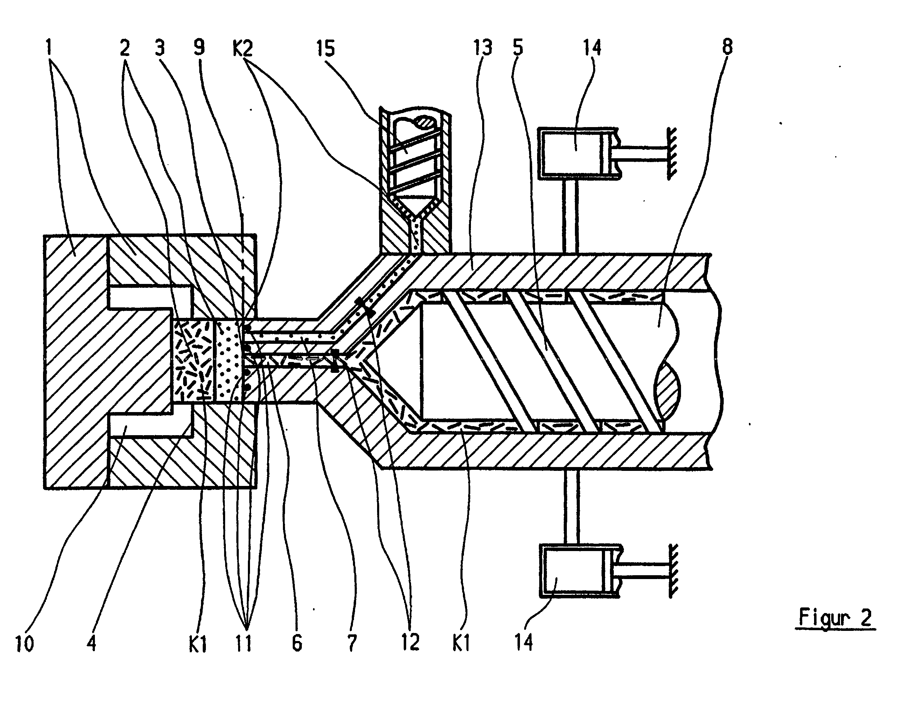

In Fig. 2 ist zu sehen, wie Kunststoffschmelze der anderen Art (K₂) über den Fließweg 7 von der zweiten Plastifiziereinheit 15 in den Schmelzesammelraum 2 ausgetragen wurde. Es befinden sich nunmehr folglich zwei Kunststoff-Schichten im Sammelraum, eine erste aus Material K₁ und "dahinter" eine aus Material K₂. Dabei befindet sich der kolbenartige Abschlußbereich 3 in der Endlage 9.

Es sei am Rande angemerkt, daß sowohl ein Einspritzen, also ein Injizieren, der jeweiligen Schmelzekomponenten in den Schmelzesammelraum 2 erfolgen kann, genauso aber auch ein Intrudieren der Komponenten direkt aus der Plastifizierbewegung der jeweiligen Schnecken heraus. Beide Verfahren sind im Stand der Technik als solche bekannt.

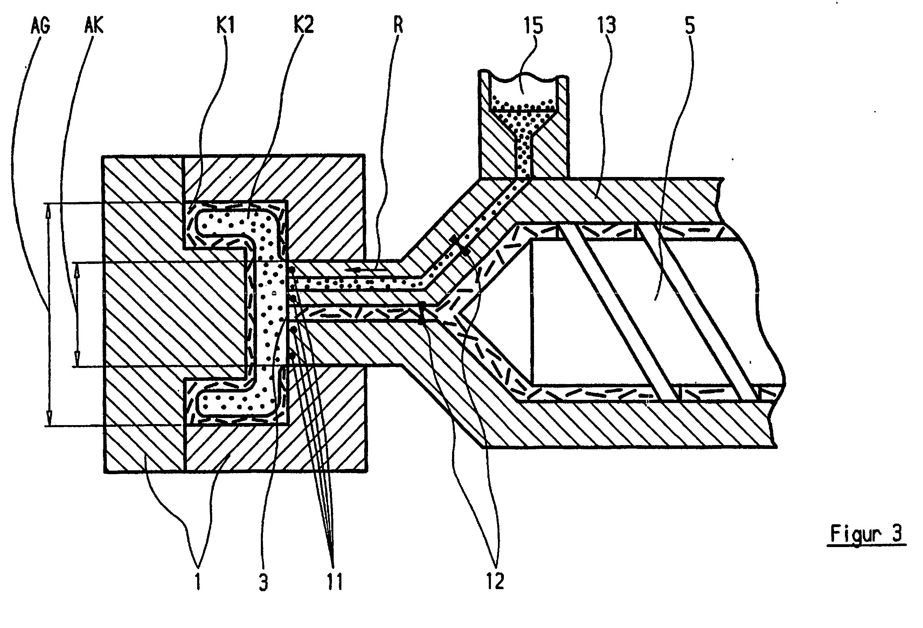

In Fig. 3 ist zu sehen, wie der Kolben am Ende des Schneckenzylinders 13 von der Endlage 9 "nach links" in Richtung R verschoben wurde, wodurch die im Sammelraum 2 eingeschlossenen Schmelzeschichten in die Kavität 10 injiziert wurden. Es bildet sich in der Kavität 10 der gewünschte zweischichtige Verbund.

Wie in Fig. 3 zu sehen ist, stellt die Fläche des kolbenartigen Abschlußbereichs 3 A_{K} einen erheblichen Teil der insgesamt projizierten Fläche A_{G} des zu spritzenden Formteils dar. Dadurch verteilt sich der durch die Kolbenfläche 3 aufgebrachte Druck gleichmäßig über die gesamte projizierte Formteilfläche in weit besserer Weise als im Stand der Technik.

In dieser Figur ist weiter zu sehen, daß das entstehende Formteil weitgehend von erster Komponente ummantelt ist, während der kolbenartige Abschlußbereich 3 nur zweite Komponente aufweist, was bei gewissen Anwendungsfällen als nachteilhaft zu werten ist.

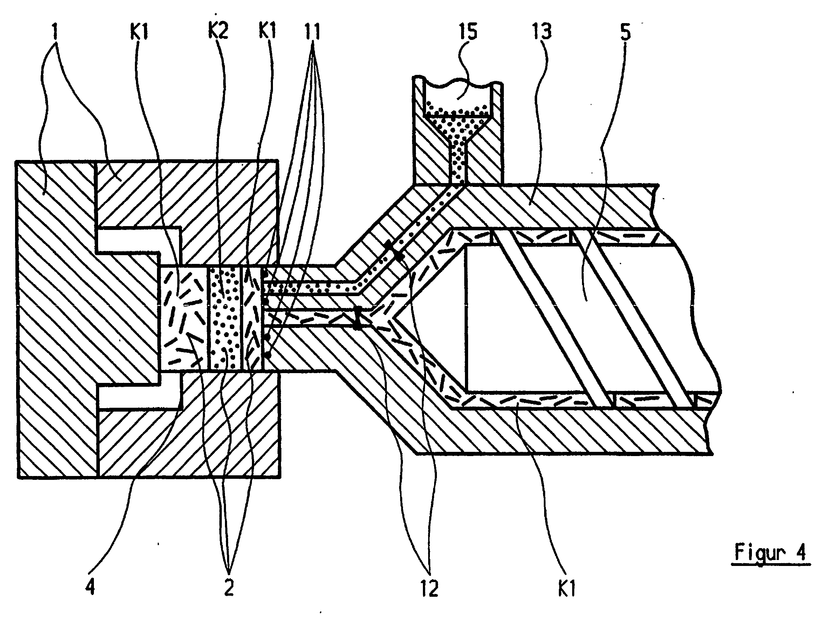

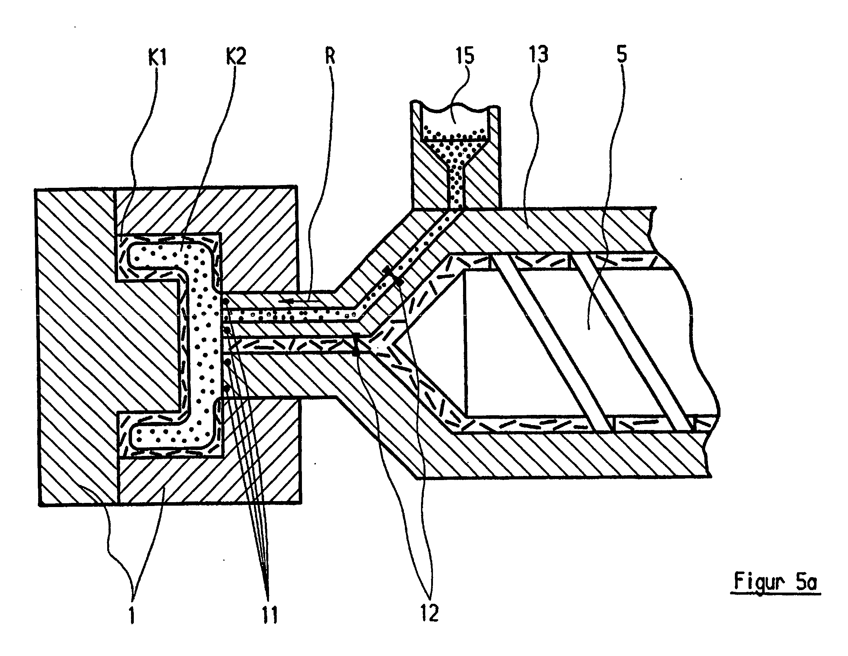

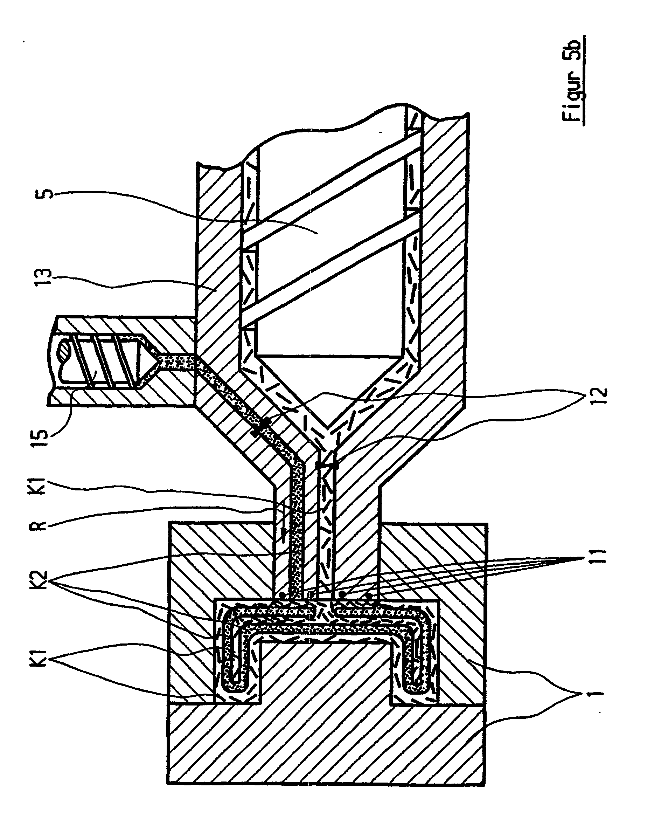

In Fig. 4 ist zu sehen, wie dieser Nachteil überwunden werden kann: Nach dem Einbringen erster und anschließender Einbringung zweiter Kunststoffkomponente in den Schmelzesammelraum 2 wird nochmals erste Kunststoffkomponente eingebracht. Es liegt also ein Schichtverbund, bestehend aus erster, zweiter und nochmals erster Kunststoffkomponente, vor. Wird dieser Schichtverbund in der beschriebenen Weise mittels des kolbenartigen Abschlußbereichs 3 in die Kavität 10 eingebracht, ergibt sich die in Fig. 5a skizzierte Schmelzeverteilung, die sich dadurch auszeichnet, daß das zweite Kunststoffmaterial völlig von erster Kunststoffschmelze ummantelt ist. Der in Fig. 5b skizzierte fünfschichtige Aufbau der Schmelzeverteilung wird über entsprechende Temperierung des kolbenartigen Abschlußbereiches 3 erreicht.

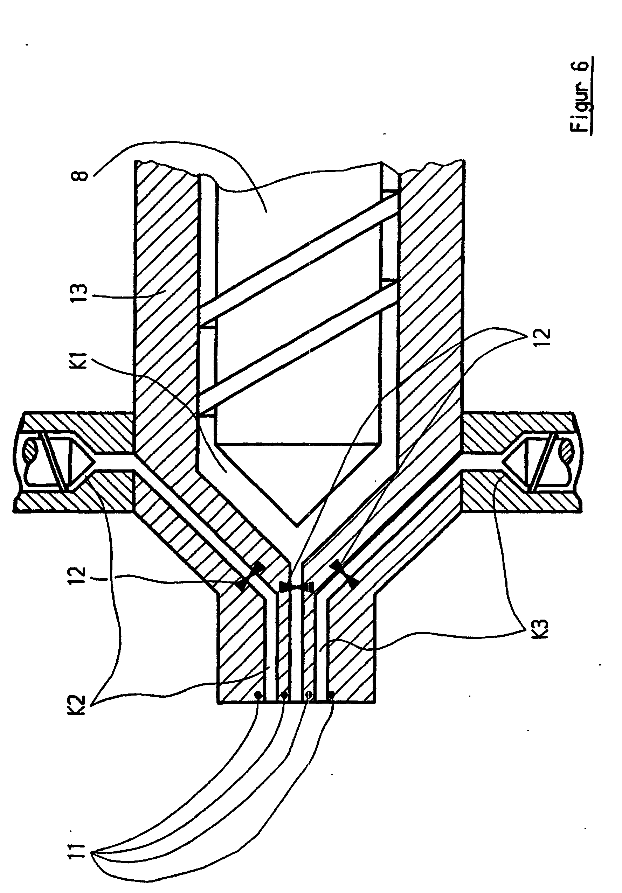

Das erfindungsgemäße Verfahren kann natürlich genauso eingesetzt werden, wenn mehr als zwei Kunststoffkomponenten verarbeitet werden sollen. Beispielhaft ist in Fig. 6 zu sehen, wie insgesamt drei verschiedene Materialien K₁, K₂ und K₃ verarbeitet werden können. Neben der Plastifiziereinheit, die in Achse mit dem kolbenartigen Abschlußbereich 3 angeordnet ist, sind zwei weitere Plastifiziereinheiten vorgesehen, die "von oben" und "von unten" an den axial angeordneten Schneckenzylinder angebracht sind. Entsprechende Schmelzefließwege sorgen für den Transport der jeweiligen Schmelzekomponenten vor den kolbenartigen Endbereich 3.

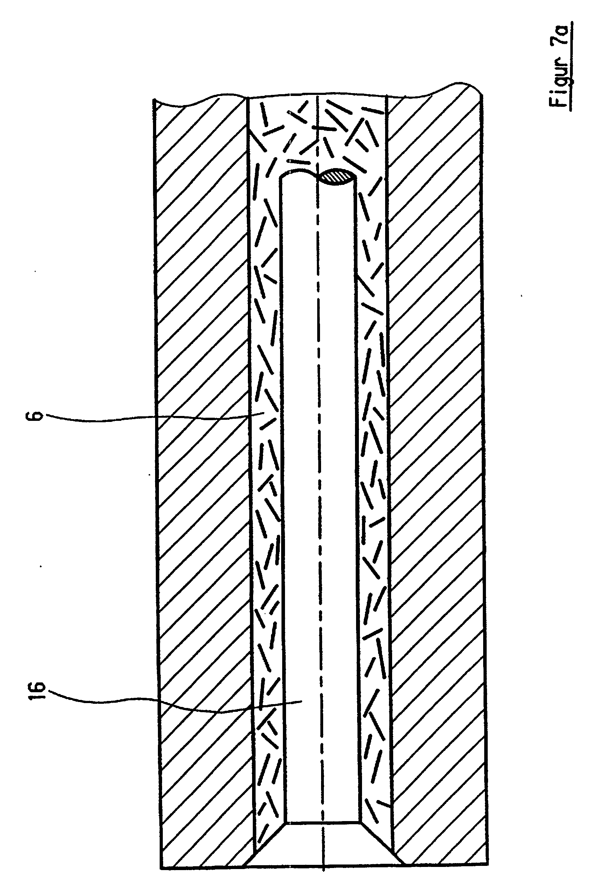

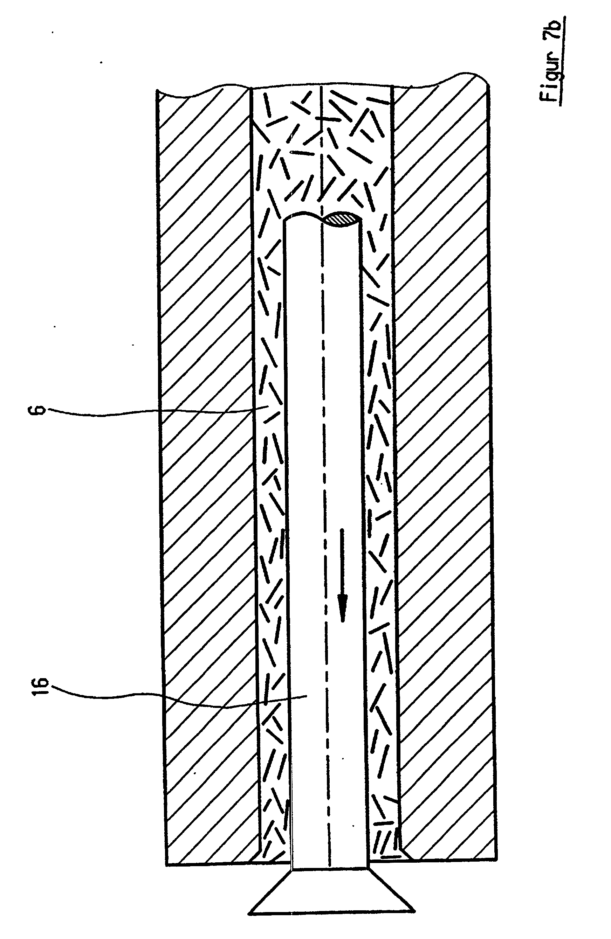

In den Figuren 7a und 7b ist zu sehen, wie der kolbenartige Abschlußbereich 3 mit einem speziellen Pilz-Ventil 16 ausgestattet werden kann, um die ganz allgemein in Fig. 1 dargestellten Ventilmittel 12 zu realisieren: Durch entsprechende axiale Positionierung des Ventils 16 wird der Schmelzefließweg 6 entweder freigegeben oder verschlossen.

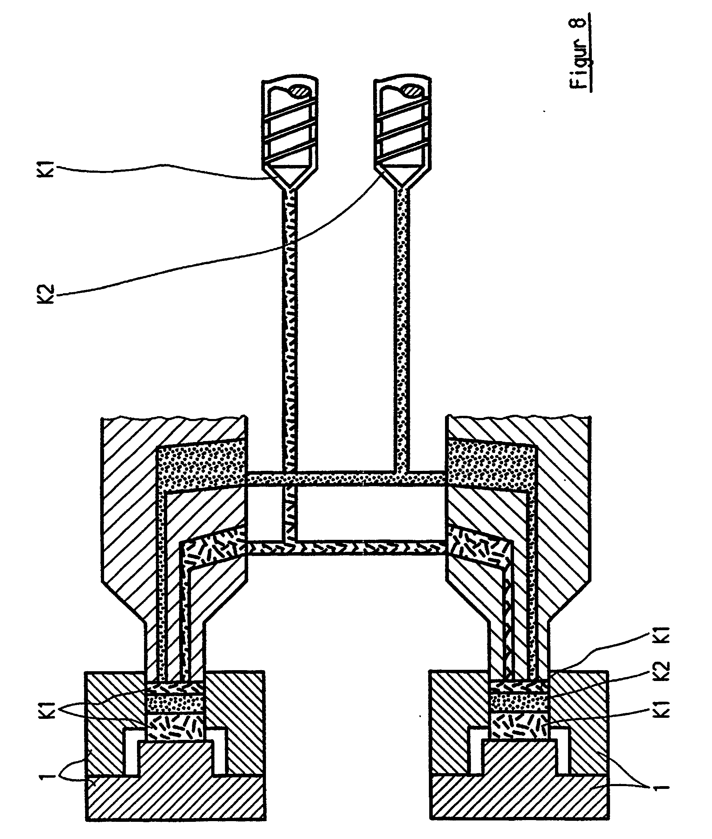

Besonders vorteilhaft und wirtschaftlich wird die gegenständliche Idee bei der Lösung gemäß Fig. 8 eingesetzt. Dort ist zu sehen, daß zwei Spritzgießwerkzeuge 1 über entsprechende Schmelzeverteiler mit Schmelze der unterschiedlichen Komponenten K₁ und K₂ versorgt werden. Damit können gleichzeitig zwei oder mehrere Kavitäten mit Schmelze versorgt werden. Alternativ ist es freilich auch möglich - dieser Fall ist jedoch nicht gezeigt -, daß im Sinne der Lösung von Fig. 8 zwei unterschiedliche Anspritzstellen an ein und derselben Kavität versorgt werden. Damit kann, namentlich bei großen Formteilen, erreicht werden, daß über eine große Formteilfläche vergleichmäßigte Druckverhältnisse herrschen.

### Bezugszeichenliste:

- 1: Spritzgießwerkzeug
- 2: Schmelzesammelraum
- 3: kolbenartiger Abschlußbereich
- 4: Kavitätswand
- 5: erste Plastifiziereinheit
- 6: Schmelzefließwege
- 7: Schmelzefließwege
- 8: Schnecke
- 9: Endlage
- 10: Kavität
- 11: Mittel zum Temperieren
- 12: Ventilmittel
- 13: Schneckenzylinder
- 14: Bewegungsmittel
- 15: zweite Plastifiziereinheit
- 16: Pilz-Ventil

- K₁: erste Kunststoff-Komponente
- K₂: zweite Kunststoff-Komponente
- K₃: dritte Kunststoff-Komponente
- R: Verschieberichtung des kolbenartigen Abschlußbereichs
- A_{K}: Fläche des kolbenartigen Abschlußbereichs
- A_{G}: Fläche der gesamten Kavitätswand

## Patentansprüche

1. Verfahren zum Mehrkomponenten-Spritzgießen von Kunststoff-Formteilen, bei dem mindestens zwei unterschiedliche Kunststoff-Komponenten (K₁, K₂) zur Ausbildung eines Kunststoff-Formteils in ein Spritzgießwerkzeug (1) eingespritzt werden, wobei das Verfahren die Schritte aufweist:
a) Einbringen einer ersten Kunststoffkomponente (K₁) in einen Schmelzesammelraum (2), der von einem kolbenartigen Abschlußbereich (3) begrenzt wird;
b) anschließendes Einbringen einer zweiten Kunststoffkomponente (K₂) in den Schmelzesammelraum (2);
c) Austreiben der im Schmelzesammelraum (2) kumulierten Kunststoffschmelze in das Spritzgießwerkzeug (1);
**dadurch gekennzeichnet,**
**daß** der kolbenartige Abschlußbereich (3) des Schmelzesammelraums (2) beim Austreiben der Kunststoffschmelze gemäß obigem Schritt c) derart verschoben wird, daß er einen Teil der Kavitätswand (4) des Spritzgießwerkzeugs (1) bildet, wobei der kolbenartige Abschlußbereich (3) im wesentlichen bündig mit dem sich an den kolbenartigen Abschlußbereich (3) angrenzenden Abschnitt der Kavitätswand (4) abschließt.

2. Verfahren nach Anspruch 1, **dadurch gekennzeichnet, daß** nach Schritt b) und vor Schritt c) gemäß Anspruch 1 weitere erste Kunststoffkomponente (K₁) in den Schmelzesammelraum (2) eingebracht wird.

3. Verfahren nach Anspruch 1 oder 2, **dadurch gekennzeichnet, daß** sich der kolbenartige Abschlußbereich (3) des Schmelzesammelraums (2) vor Beginn des Austreibens der Kunststoffschmelze in das Spritzgießwerkzeug (1) in einer Endlage (9) befindet.

4. Verfahren nach einem der Ansprüche 1 bis 3, **dadurch gekennzeichnet, daß** das Austreiben der im Schmelzesammelraum (2) kumulierten Kunststoffschmelze in das Spritzgießwerkzeug (1) zumindest zeitweise gesteuert oder geregelt erfolgt.

5. Verfahren nach Anspruch 4, **dadurch gekennzeichnet, daß** die Regelung bzw. Steuerung in Abhängigkeit des Schmelzedrucks im Schmelzesammelraum (2) erfolgt.

6. Verfahren nach Anspruch 4 oder 5, **dadurch gekennzeichnet, daß** die Regelung bzw. Steuerung zeit-, weg- oder druckabhängig erfolgt.

7. Verfahren nach einem der Ansprüche 1 bis 6, **dadurch gekennzeichnet, daß** der Nachdruck auf die Schmelze nach dem Austreiben der im Schmelzesammelraum (2) kumulierten Kunststoffschmelze in das Spritzgießwerkzeug (1) über den kolbenartigen Abschlußbereich (3) des Schmelzesammelraums (2) aufgebracht wird.

8. Verfahren nach einem der Ansprüche 1 bis 7, **dadurch gekennzeichnet, daß** der kolbenartige Abschlußbereich (3) des Schmelzesammelraums (2) zumindest zeitweise temperiert wird.

9. Verfahren nach einem der Ansprüche 1 bis 8, **dadurch gekennzeichnet, daß** beim Austreiben der im Schmelzesammelraum (2) kumulierten Kunststoffschmelze in das Spritzgießwerkzeug (1) eine dort positionierte Folie hinterspritzt wird.

10. Verfahren nach einem der Ansprüche 1 bis 8, **dadurch gekennzeichnet, daß** beim Austreiben der im Schmelzesammelraum (2) kumulierten Kunststoffschmelze in das Spritzgießwerkzeug (1) ein dort positioniertes Textilmaterial hinterspritzt wird.

11. Verfahren nach einem der Ansprüche 1 bis 10, **dadurch gekennzeichnet, daß** nach dem Austreiben der im Schmelzesammelraum (2) kumulierten Kunststoffschmelze in das Spritzgießwerkzeug (1) durch den kolbenartigen Abschlußbereich (3) ein Prägevorgang ausgeführt wird.

12. Vorrichtung zum Mehrkomponenten-Spritzgießen von Kunststoff-Formteilen, insbesondere zur Durchführung des Verfahrens nach einem der Ansprüche 1 bis 11, die aufweist:
- mindestens zwei Plastifiziereinheiten (5, 15) zum Plastifizieren von zwei Kunststoffmaterialien (K₁ ,K₂),
- einen Schmelzesammelraum (2), in den die von den Plastifiziereinheiten (5, 15) hergestellten Kunststoffschmelzen (K1 ,K2) gesammelt werden, und
- ein Spritzgießwerkzeug (1) mit einer Werkzeugkavität (10),
**dadurch gekennzeichnet,**
**daß** der Schmelzesammelraum (2) von einem kolbenartigen Abschlußbereich (3) begrenzt wird, der so geformt ist, daß er zumindest einen Teil der Kavitätswand (4) des Spritzgießwerkzeugs (1) bildet, wobei der kolbenartige Abschlußbereich (3) im wesentlichen bündig mit dem sich an den kolbenartigen Abschlußbereich (3) angrenzenden Abschnitt der Kavitätswand (4) abschließt.

13. Vorrichtung nach Anspruch 12, **dadurch gekennzeichnet, daß** im Bereich des kolbenartigen Abschlußbereichs (3) des Schmelzesammelraums (2) Mittel zum Temperieren (11) angeordnet sind.

14. Vorrichtung nach Anspruch 12 oder 13, **dadurch gekennzeichnet, daß** in den Schmelzefließwegen (6, 7) Ventilmittel (12) angeordnet sind, mit denen der Durchfluß von Kunststoffschmelze unterbrochen und freigegeben werden kann.

15. Vorrichtung nach einem der Ansprüche 12 bis 14, **dadurch gekennzeichnet, daß** der kolbenartigen Abschlußbereich (3) des Schmelzesammelraums (2) als Endstück eines Schneckenzylinders (13) ausgebildet ist, in dem eine axialverschieblich in diesem angeordnete Plastifizier- und Schubschnecke (8) angeordnet ist.

16. Vorrichtung nach Anspruch 15, **dadurch gekennzeichnet, daß** der Schneckenzylinder (13) mit Bewegungsmitteln (14) in Verbindung steht, mit denen der Schneckenzylinder(13) relativ zum Spritzgießwerkzeug (1) bewegt werden kann.

17. Vorrichtung nach einem der Ansprüche 12 bis 16, **dadurch gekennzeichnet, daß** die projizierte Fläche (A_{K}) des kolbenartigen Abschlußbereichs (3) in seiner Verschieberichtung (R) einen Anteil von mindestens 0,5 %, vorzugsweise mindestens 5 %, der projizierten Fläche (A_{G}) der gesamten Kavitätswand (4) in der Verschieberichtung (R) beträgt.

## Claims

1. Process for multi-component injection-moulding of plastic mouldings, in which at least two different plastic components (K₁, K₂) are injected into an injection-moulding die (1) to form a plastic moulding, wherein the process has the steps:
a) introducing a first plastic component (K₁) into a melt-collecting chamber (2), which is defined by a piston-like closing region (3);
b) subsequent introduction of a second plastic component (K₂) into the melt-collecting chamber (2);
c) expelling the plastic melt accumulated in the melt-collecting chamber (2) into the injection-moulding die (1);
**characterised in that**
the piston-like closing region (3) of the melt-collecting chamber (2) is displaced during expelling of the plastic melt according to the above step c) such that it forms a part of the cavity wall (4) of the injection-moulding die (1), wherein the piston-like closing region (3) closes essentially flush with the section of the cavity wall (4) bordering on the piston-like closing region (3).

2. Process according to claim 1, **characterised in that** after step b) and before step c) according to claim 1, further first plastic component (K₁) is introduced into the melt-collecting chamber (2).

3. Process according to claim 1 or 2, **characterised in that** the piston-like closing region (3) of the melt-collecting chamber (2) is situated in an end position (9) before the start of expelling of the plastic melt into the injection-moulding die (1).

4. Process according to one of claims 1 to 3, **characterised in that** expelling of the plastic melt accumulated in the melt-collecting chamber (2) into the injection-moulding die (1) takes place in controlled or regulated manner at least at times.

5. Process according to claim 4, **characterised in that** regulation or control is effected as a function of the melt pressure in the melt-collecting chamber (2).

6. Process according to claim 4 or 5, **characterised in that** regulation or control is effected depending on time, path or pressure.

7. Process according to one of claims 1 to 6, **characterised in that** the dwell pressure is applied to the melt after expelling the plastic melt accumulated in the melt-collecting chamber (2) into the injection-moulding die (1) via the piston-like closing region (3) of the melt-collecting chamber (2).

8. Process according to one of claims 1 to 7, **characterised in that** the piston-like closing region (3) of the melt-collecting chamber (2) is tempered at least at times.

9. Process according to one of claims 1 to 8, **characterised in that** during expelling of the plastic melt accumulated in the melt-collecting chamber (2) into the injection-moulding die (1), a film positioned there is injected behind.

10. Process according to one of claims 1 to 8, **characterised in that** during expelling of the plastic melt accumulated in the melt-collecting chamber (2) into the injection-moulding die (1), a textile material positioned there is injected behind.

11. Process according to one of claims 1 to 10, **characterised in that** after expelling the plastic melt accumulated in the melt-collecting chamber (2) into the injection-moulding die (1) through the piston-like closing region (3), an embossing step is executed.

12. Device for multi-component injection-moulding of plastic mouldings, in particular for carrying out the process according to one of claims 1 to 11, which has:
- at least two plastifying units (5, 15) for plastifying two plastic materials (K₁, K₂),
- a melt-collecting chamber (2), in which the plastic melts (K₁, K₂) produced by the plastifying units (5, 15) are collected, and
- an injection-moulding die (1) having a die cavity (10),
**characterised in that**
the melt-collecting chamber (2) is defined by a piston-like closing region (3) which is shaped so that it forms at least a part of the cavity wall (4) of the injection-moulding die (1), wherein the piston-like closing region (3) closes essentially flush with the section of the cavity wall (4) bordering on the piston-like closing region (3).

13. Device according to claim 12, **characterised in that** means for tempering (11) are arranged in the region of the piston-like closing region (3) of the melt-collecting chamber (2).

14. Device according to claim 12 or 13, **characterised in that** valve means (12), with which the throughflow of plastic melt may be interrupted and released, are arranged in the melt flow paths (6, 7).

15. Device according to one of claims 12 to 14, **characterised in that** the piston-like closing region (3) of the melt-collecting chamber (2) is designed as an end piece of a screw cylinder (13), in which a plastifying and reciprocating screw (8), arranged to be axially displaceable in the latter, is arranged.

16. Device according to claim 15, **characterised in that** the screw cylinder (13) is connected to movement means (14), with which the screw cylinder (13) may be moved relative to the injection-moulding die (1).

17. Device according to one of claims 12 to 16, **characterised in that** the projected surface (A_{K}) of the piston-like closing region (3) in its displacement direction (R) is a portion of at least 0.5 %, preferably at least 5%, of the projected surface (A_{G}) of the entire cavity wall (4) in the displacement direction (R).

## Revendications

1. Procédé de moulage par injection à plusieurs constituants de pièces en plastique, dans lequel au moins deux constituants de plastique différents (K₁, K₂) sont injectés dans un moule d'injection (1) pour la formation d'une pièce en plastique, ce procédé présentant les étapes suivantes :
a) introduction d'un premier constituant de plastique (K₁) dans un espace collecteur de matière liquide (2) qui est limité par une zone de clôture du genre piston (3),
b) ensuite, introduction d'une deuxième constituant de plastique (K₂) dans l'espace collecteur de matière fondue (2),
c) expulsion dans le moule d'injection (1) du plastique fondu accumulé dans l'espace collecteur de matière fondue (2),
**caractérisé par le fait**
**que** la zone de clôture du genre piston (2) de l'espace collecteur de matière fondue (2) est, lors de l'expulsion du plastique fondu selon l'étape c) ci-dessus, déplacée de façon à former une partie de la paroi (4) de la cavité du moule d'injection (1), la zone de clôture du genre piston (3) se terminant sensiblement à fleur de la partie de la paroi (4) de la cavité contiguë à ladite zone de clôture (3).

2. Procédé selon la revendication 1, **caractérisé par le fait qu'**après l'étape b) et avant l'étape c) selon la revendication 1, du premier constituant de plastique (K₁) supplémentaire est introduit dans l'espace collecteur de matière fondue (2).

3. Procédé selon l'une des revendications 1 et 2, **caractérisé par le fait qu'**avant le début de l'expulsion du plastique fondu dans le moule d'injection (1), la zone de clôture du genre piston (3) de l'espace collecteur de matière fondue (2) se trouve dans une position extrême (9).

4. Procédé selon l'une des revendications 1 à 3, **caractérisé par le fait que** l'expulsion dans le moule d'injection (1) du plastique fondu accumulé dans l'espace collecteur de matière fondue (2) se fait au moins par moments de façon commandée ou régulée.

5. Procédé selon la revendication 4, **caractérisé par le fait que** la régulation ou la commande se fait en fonction de la pression de la matière fondue dans l'espace collecteur de matière fondue (2).

6. Procédé selon l'une des revendications 4 et 5, **caractérisé par le fait que** la régulation ou la commande se fait en fonction du temps, de la course ou de la pression.

7. Procédé selon l'une des revendications 1 à 6, **caractérisé par le fait que** la pression de moulage est appliquée sur la matière fondue, après l'expulsion dans le moule d'injection (1) du plastique fondu accumulé dans l'espace collecteur de matière fondue (2), par l'intermédiaire de la zone de clôture du genre piston (3) de l'espace collecteur de matière fondue (2).

8. Procédé selon l'une des revendications 1 à 7, **caractérisé par le fait que** la température de la zone de clôture du genre piston (3) de l'espace collecteur de matière fondue (2) est réglée au moins par moments.

9. Procédé selon l'une des revendications 1 à 8, **caractérisé par le fait que** lors de l'expulsion dans le moule d'injection (1) du plastique fondu accumulé dans l'espace collecteur de matière fondue (2) est injecté derrière une feuille placée à cet endroit.

10. Procédé selon l'une des revendications 1 à 8, **caractérisé par le fait que** lors de l'expulsion dans le moule d'injection (1) du plastique fondu accumulé dans l'espace collecteur de matière fondue (2) est injectée derrière une matière textile placée à cet endroit.

11. Procédé selon l'une des revendications 1 à 10, **caractérisé par le fait qu'**après l'expulsion dans le moule d'injection (1) du plastique fondu accumulé dans l'espace collecteur de matière fondue (2), une opération d'estampage est exécutée par la zone de clôture du genre piston (3).

12. Dispositif de moulage par injection à plusieurs constituants de pièces en plastique, en particulier pour la mise en oeuvre du procédé selon l'une des revendications 1 à 11, qui présente :
- au moins deux dispositifs de plastification (5, 15) pour la plastification de deux matières plastiques (K₁, K₂),
- un espace collecteur de matière fondue (2) dans lequel sont recueillis les plastiques fondus (K1, K2) produits par les dispositifs de plastification (5, 15), et
- un moule d'injection (1) ayant une cavité (10),
**caractérisé par le fait**
**que** l'espace collecteur de matière fondue (2) est limité par une zone de clôture du genre piston (3) qui est faite de façon à former au moins une partie de la paroi (4) de la cavité du moule d'injection (1), le zone de clôture du genre piston (3) se terminant sensiblement à fleur de la partie de la paroi (4) de la cavité contiguë à la zone de clôture du genre piston (3).

13. Dispositif selon la revendication 12, **caractérisé par le fait que** dans la zone de la zone de clôture du genre piston (3) de l'espace collecteur de matière fondue (2) sont placés des moyens de réglage de température (11).

14. Dispositif selon l'une des revendications 12 et 13, **caractérisé par le fait que** dans les voies d'écoulement de la matière fondue (6, 7) sont placées des vannes (12) qui permettent d'interrompre et de débloquer le passage de plastique fondu.

15. Dispositif selon l'une des revendications 12 à 14, **caractérisé par le fait que** la zone de clôture du genre piston (3) de l'espace collecteur de matière fondue (2) forme le bout d'un cylindre à vis (13) dans lequel est montée mobile axialement une vis de plastification et de poussée (8).

16. Dispositif selon la revendication 15, **caractérisé par le fait que** le cylindre à vis (13) est en liaison avec des moyens de déplacement (14) qui permettent de le déplacer par rapport au moule d'injection (1).

17. Dispositif selon l'une des revendications 12 à 16, **caractérisé par le fait que** la surface projetée (A_{K}) de la zone de clôture du genre piston (3) dans la direction de déplacement (R) de cette dernière représente au moins 0,5 %, de préférence au moins 5 %, de la surface projetée (A_{G}) de la paroi (4) entière de la cavité dans la direction de déplacement (R).
